Europäisches Patentamt

European Patent Office

Office européen des brevets

(11) Numéro de publication: **0 084 468**
**B1**

(12) **FASCICULE DE BREVET EUROPEEN**

(45) Date de publication du fascicule du brevet: **02.09.87**

(21) Numéro de dépôt: **83400021.8**

(22) Date de dépôt: **04.01.83**

(51) Int. Cl.⁴: **G 01 S 5/18, G 01 S 11/00**

(54) Système de positionnement acoustique.

(30) Priorité: **12.01.82 FR 8200370**

(43) Date de publication de la demande:
**27.07.83 Bulletin 83/30**

(45) Mention de la délivrance du brevet:
**02.09.87 Bulletin 87/36**

(84) Etats contractants désignés:
**DE GB NL**

(56) Documents cités:
**FR-A-2 372 435**
**FR-A-2 386 048**
**GB-A-2 017 448**
**GB-A-2 051 365**
**US-A-3 860 900**
**US-A-4 070 671**
**US-A-4 229 737**
**US-A-4 229 809**

"Underwater Acoustic Positioning Systems" de
**P.H. Milne, Livre publié par E + F.N. Spon Ltd.**
**London 1983, p. 50-51**

(73) Titulaire: **THOMSON-CSF**
**173, Boulevard Haussmann**
**F-75379 Paris Cedex 08 (FR)**

(72) Inventeur: **Peynaud, François**
**THOMSON-CSF SCPI 173, bld Haussmann**
**F-75379 Paris Cedex 08 (FR)**
Inventeur: **Gosselin, Jean**
**THOMSON-CSF SCPI 173, bld Haussmann**
**F-75379 Paris Cedex 08 (FR)**
Inventeur: **Farcy, André**
**THOMSON-CSF SCPI 173, bld Haussmann**
**F-75379 Paris Cedex 08 (FR)**
Inventeur: **Grandvaux, Bernard**
**THOMSON-CSF SCPI 173, bld Haussmann**
**F-75379 Paris Cedex 08 (FR)**

(74) Mandataire: **Wang, Pierre et al**
**THOMSON-CSF SCPI 173, Bld Haussmann**
**F-75379 Paris Cedex 08 (FR)**

Courier Press, Leamington Spa, England.

## Description

La présente invention a pour objet un dispositif de positionnement acoustique précis de plusieurs mobiles de surface et sous-marins habités ou non, dans une zone préalablement délimitée.

Plus précisément, ce dispositif permet à plusieurs mobiles de surface ou sous-marins habités, et dont le nombre peut être très grand, de connaître en permanence leur position par rapport à un système de référence commun. En outre, avec ce dispositif la position de tout mobile, en particulier sous-marins non habités, peut être connue en permanence sur une station fixe. Leur nombre est dans ce cas limité. Ce dispositif peut être utilisé chaque fois que des mobiles ont à connaître leur position de manière précise par exemple sur un champ de production pétrolier ou pour la recherche océanographique.

Le principe de base d'un système de positionnement acoustique, repose sur la mesure précise des temps de propagation d'un signal acoustique ultrasonore entre un émetteur et un récepteur. La connaissance de la vitesse de propagation du son dans l'eau, permet ainsi de mesurer des distances. A partir de ce principe connu, il existe deux techniques de positionnement. La première appelée hyperbolique, utilise des différences de parcours et ne nécessite pas la connaissance de l'instant d'émission. La seconde appelée circulaire synchrone nécessite la connaissance de l'instant d'émission.

La technique dite circulaire synchrone est généralement utilisée, lorsque l'on désire un positionnement de précision, approximativement constante, sur toute la zone de mesure, ce qui n'est pas le cas avec un système hyperbolique. Les nombreux systèmes de positionnement utilisant cette technique sont actifs, c'est à dire que le mobile qui se positionne émet un signal acoustique ou électromagnétique. L'instant d'émission est ainsi disponible à bord, (voir le livre "Underwater Acoustic Positioning Systems" de P. H. Milne, publié par E. & F. N. Spon Ltd., London 1983, pages 50 à 51).

Ces systèmes présentent en particulier l'inconvénient, de limiter le nombre de mobiles, qui peuvent se positionner sur une même zone, puisque chaque mobile doit émettre sur une fréquence particulière et attendre la réponse. Cette limitation provient essentiellement, de la nécessité d'éviter les interférences, avec les bandes de fréquence acoustiques déjà utilisées sur la zone (sonars, téléphone, transmissions acoustiques d'informations ou de sécurité).

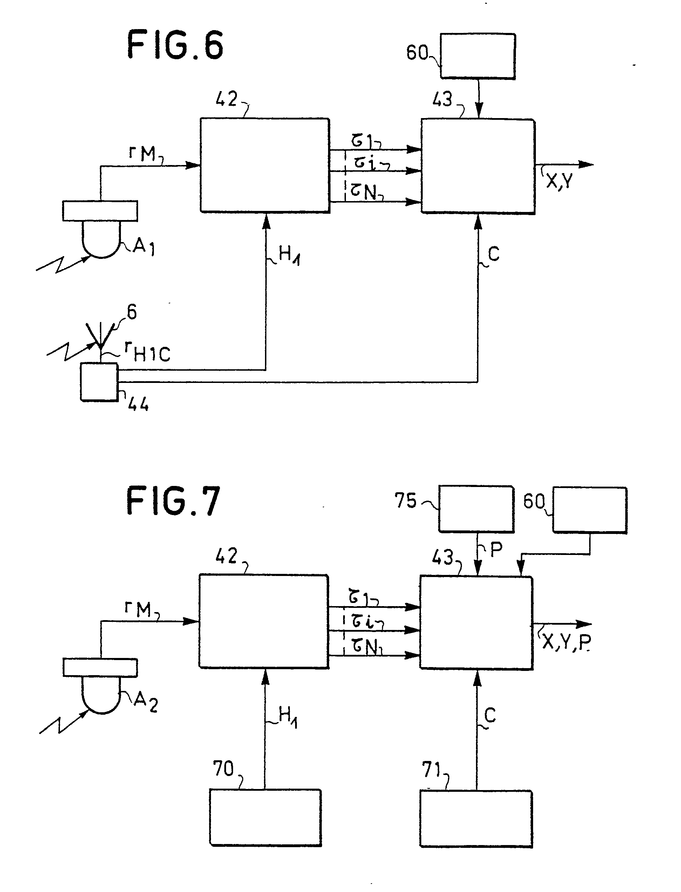

Le dispositif de positionnement suivant l'invention tel que défini dans la revendication 1, utilise la technique circulaire synchrone et les mobiles dont la position doit être connue à bord sont passifs, ce qui permet de remédier à l'inconvenient indiqué précédemment. Un système de positionnement passif de véhicules marins comprenant un interrogateur séparé du véhicule et un ensemble de bouées fixes est connu de US—A—4229737, Fig. 7. Dans ce système, les distances entre les bouées et le véhicule sont déterminées à partir des différences de phases entre des ondes électromagnétiques transmises sur la commande de l'interrogateur par les bouées fixes au véhicule.

Les caractéristiques et avantages ressortiront de la description qui va suivre, illustrée par les figures qui représentent:

— figure 1, le schéma de principe de positionnement d'un bateau ou d'un sous-marin, suivant l'invention;
— figure 2, un bloc-diagramme des circuits d'émission; de réception et de traitement à la station fixe;
— figure 3, le schéma des circuits de mesure des retards des impulsions de réponse des bouées répondeuses;
— figure 4, le schéma de réception-émission d'une bouée répondeuse;
— figure 5, des signaux temporels utilisés pour la bouée répondeuse;
— figure 6 le schéma de réception acoustique et radioélectrique et les circuits de traitement dans le bateau à positionner;
— figure 7, le schéma de réception acoustique et de traitement dans le sous-marin à positionner;
— figure 8, le schéma d'émission-réception dans le sous-marin à positionner avec un positionnement dans la station fixe, suivant une variante de l'invention.

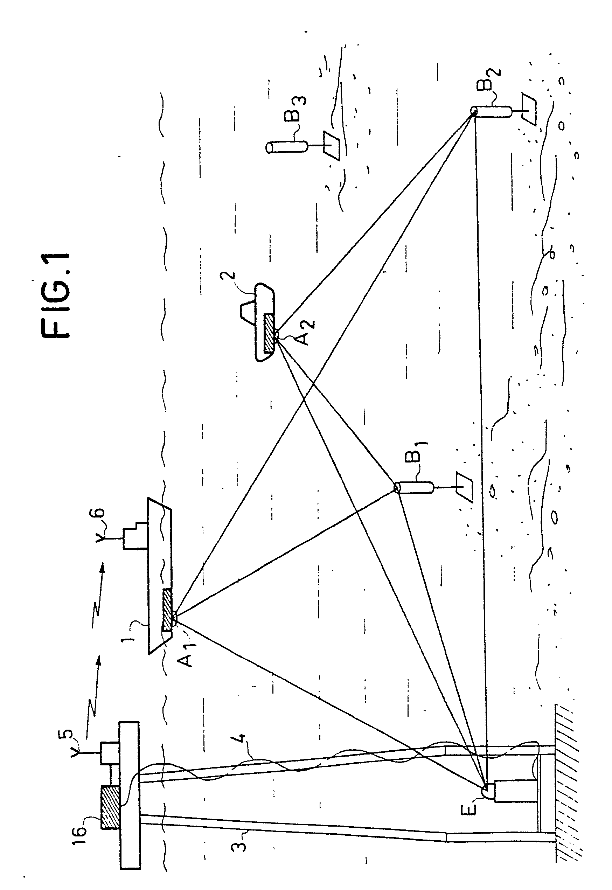

La figure 1 montre le dispositif de positionnement suivant l'invention, soit pour un bateau de surface 1, soit pour un sous-marin 2.

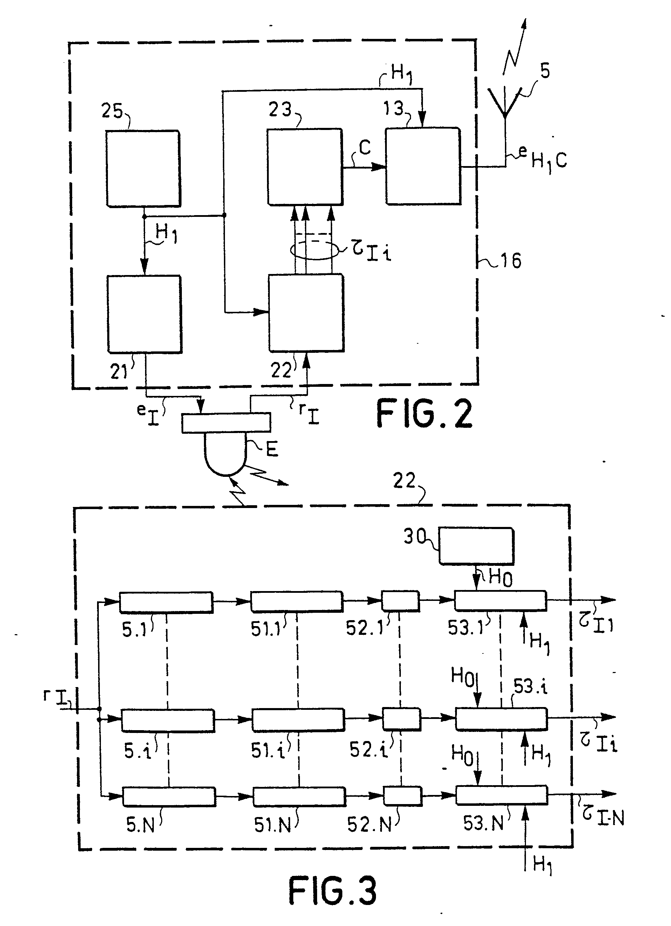

Le dispositif comprend un émetteur ou émetteur-récepteur acoustique E, appelé interrogateur placé sur le fond de la mer et un certain nombre N be balises répondeuses $B_1, \ldots B_i, \ldots B_N$. L'interrogateur E émet périodiquement à la cadence d'une horloge des impulsions $H_1$ (Fig. 2) à une fréquence f. Les balises $B_1, \ldots B_i, \ldots B_N$ répondent par l'émission acoustique d'impulsions aux fréquences toutes différentes $f_1, \ldots f_i \ldots f_N$.

Ces balises répondeuses sont également amarrées au fond de la mer et leurs positions ainsi que celle de l'interrogateur E sont déterminées au préalable par des méthodes connues. A toutes ces positions correspondent des coordonnées par rapport à un référentiel fixe.

Les véhicules marins 1 ou 2 à positionner ont des antennes acoustiques de réception $A_1$ et $A_2$. Au temps $t = t_o$ l'interrogateur E interroge les bouées répondeuses, telles que $B_i$. Celles-ci répondent et leur émission est reçue par l'antenne du mobile aux temps:

$$t_i = t_o + (|EB_i| + |B_iA|)/C + \Delta t_i \qquad (1)$$

2

0 084 468

A est la position d'une antenne $A_1$ ou $A_2$, $\Delta t_i$ est la constante de temps de réponse de la bouée $B_i$ et C la vitesse des ondes acoustiques.

A bord des mobiles on détermine les retards $\tau_i = t_i - t_o$.

Les valeurs de $t_o$, comme on verra plus loin, ainsi que celles de $\Delta t_i$, C et $|EB_i|$ étant connus à bord, les moyens de calculs peuvent déterminer les valeurs de $|B_iA|$ par la relation (1).

A partir de deux valeurs, telles que $|B_1A|$ et la profondeur pour le sous-marin, il est possible de déterminer les coordonnées X et Y du mobile, mais il reste une ambiguïté sur ces coordonnées.

La connaissance de $|B_1A|$ détermine une sphère centrée sur $B_1$, qui est le lieu du mobile si l'on ne connait pas son immersion. Ce lieu se réduit à un cercle pour un bâtiment de surface ou un sous-marin dont on connait la profondeur.

Avec une deuxième balise le lieu est un deuxième cercle et les points communs aux deux cercles sont deux points, pour un bâtiment de surface ou un sous-marin dont ou connait l'immersion.

En général les bâtiments connaissent le côté où ils se trouvent par rapport à la droite, qui joint les centres des cercles.

Cependant l'ambiguïté peut être levée en utilisant le signal d'une troisième bouée répondeuse ou le signal direct de l'interrogateur E.

Pour le bateau de surface 1, l'origine du temps $t_o$ peut être obtenu directement par la réception de signaux radioélectriques, émis par l'antenne 5 et reçu par l'antenne 6.

On a représenté sur la figure 1, une structure 3 posée sur le fond communiquant par un câble 4 avec l'interrogateur E. La structure porte des ensembles électroniques 16 comprenant l'horloge de synchronisation qui pilote l'émission de l'interrogateur E.

Ces signaux d'horloge $H_1$ sont transmis par signaux radioélectriques et les temps de propagation des signaux radioélectriques sont négligeables par rapport aux temps de propagation des signaux acoustiques.

L'antenne d'émission radioélectrique sur la structure 3, émet également des signaux fournissant la valeur moyenne de la vitesse C, les valeurs C étant calculés à partir des signaux de réponse des balises $B_1, \ldots B_i, \ldots B_N$ et reçus par l'interrogateur E.

Pour le sous-marin 2 la valeur de l'origine du temps $t_o$ est obtenue grâce à des horloges stables.

L'horloge pilotant les émissions de l'interrogateur à une faible dérive, pour ne pas affecter la précision du positionnement sur de longues périodes. Il peut s'agir par exemple d'une horloge thermostatée au Césium (précision $10^{-9}$). Une seconde horloge se trouve à bord su sous-marin 2, cette horloge est semblable à la première sur laquelle elle a été synchronisée. Il est évident que cette solution à deux horloges synchronisées est également valable pour un bâtiment de surface si l'équipement radio n'existe pas.

La figure 2 donne un schéma pour l'émission-réception de l'interrogateur E et des signaux émis par l'antenne radioélectrique 5.

L'horloge stable 25 fournit les signaux de déclenchement $H_1$ des signaux d'émission $e_i$ à la fréquence f à un générateur 21, qui sont appliqués aux transducteurs de l'interrogateur E. Les signaux $r_i$ reçus en retour pas ces transducteurs en provenance des bouées répondeuses sont appliqués aux circuits de mesure 22, dans lesquels on détermine les temps de retard de ces signaux. $\tau_{Ii}$. Ces retards sont tels que:

$$\tau_{Ii} = 2|EB_i|/C + \Delta t_i \qquad (2)$$

En fournissant les valeurs de $T_{Ii}$, $|EB_i|$ et $\Delta t_i$ au circuit de calcul 23, on obtient i valeurs de C par la relation (2), qui sont ensuite moyennées. Cette valeur moyenne de C est transmise au bateau par l'antenne radioélectrique 5, en même temps que les signaux d'horloge $H_1$, par un signal $e_{H_1 c}$ généré par un circuit 13.

La figure 3 montre le schéma du circuit de calcul 2 qui fournit les retards $\tau_{I1}, \ldots \tau_{Ii}, \ldots \tau_{IN}$. Le signal $r_i$ reçu par l'interrogateur E est appliqué aux N amplificateurs sélectifs $5.1, \ldots 5.i, \ldots 5N$, centrés sur les fréquences $f_1, \ldots f_i, \ldots f_N$. Les signaux filtrés et amplifiés sont détectés dans les circuits $51.1, \ldots 51.i, \ldots 51.N$. Les signaux détectés sont appliqués à des circuits $51.1, \ldots 52.i, \ldots 52N$ qui fournissent des impulsions pour arrêter les compteurs $53.1, \ldots 53.i, \ldots 53.N$, qui comptent des impulsions $H_o$ d'une horloge 30. La remise à zéro se faisant par les signaux $H_1$. Les compteurs fournissent ainsi les retards $\tau_{I1}, \ldots \tau_{Ii}, \ldots \tau_{IN}$, utilisés pour le calcul de la vitesse C.

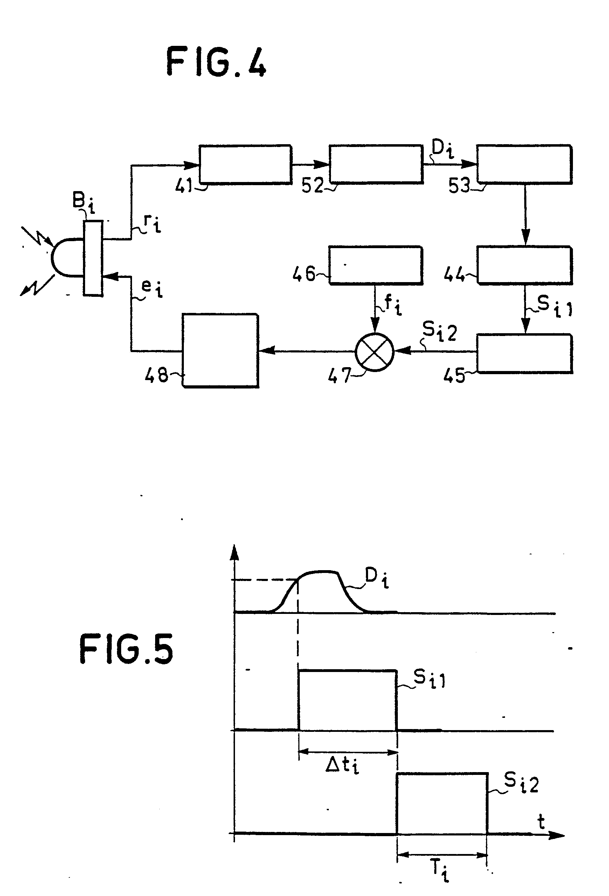

La figure 4 donne le schéma réception-émission d'une bouée répondeuse classique $B_i$.

Le signal reçu $r_i$ est amplifié et filtré autour de la fréquence f par le circuit 41 et détecté par le circuit 52. Le signal détecté $D_i$ est appliqué à un comparateur de seuil 53. Le signal de comparaison est appliqué à un premier monostable 44 qui fournit une impulsion rectangulaire $S_{i1}$. Le front arrière de cette impulsion déclenche un second monostable 45 fournissant une impulsion rectangulaire retardée $S_{i2}$, qui commande par un modulateur 47, le signal d'un oscillateur 46 à la fréquence $f_i$ caractéristique de la bouée $B_i$. Le signal est appliqué aux circuits d'émission 48 qui fournissent le signal d'émission de la bouée répondeuse $B_i$.

La figure 5 montre quelques signaux temporels. Le signal détecté $D_i$ déclenche l'impulsion rectangulaire $S_{i1}$ de largeur $\Delta t_i$ dont le front arrière déclenche une nouvelle impulsion rectangulaire $S_{i2}$ de durée $T_i$. On obtient ainsi une émission retardée, ce qui permet de bien séparer l'émission de la réception.

Les figures 6 et 7 montrent respectivement les schémas de réception et de traitement à bord du bateau 1 et du sous-marin 2. L'antenne acoustique de réception $A_1$ reçoit un signal $r_M$, qui est appliqué au circuit 42

3

analogue au circuit 22 de la figure 3. Ce circuit fournit les retards $\tau_1, \ldots \tau_i, \ldots \tau_N$, des signaux de réponse des bouées répondeuses. Le signal d'horloge $H_1$ fournit le temps $t_o$ d'émission de l'interrogateur E au circuit 42. Le circuit de calcul 43 reçoit d'une part les données variables des retards et de la vitesse des ondes acoustiques et d'autre part d'une mémoire 60 les données fixes, telles que les coordonnées de l'interrogateur et des bouées. Il fournit les coordonnées X et Y du mobile.

Pour les bateaux, figure 6, les valeurs de C et les impulsions d'horloge $H_1$ sont fournies par le signal $r_{H_1c}$ reçu par l'antenne radioélectrique 6 et traité par les circuits de détection 44.

Pour un mobile sous-marin 2, figure 7, les signaux d'horloge H sont fournis par une horloge 70 stable à $10^{-9}$, synchronisée ayant la plongée avec l'horloge 25 également stable à $10^{-9}$. La valeur de C est fournie par une mémoire 71, qui contient les résultats de mesure de C également relevée avant la plongée. La mémoire 60 fournit encore les coordonnées de l'interrogateur et des bouées.

La valeur de la profondeur P est mesurée par un instrument 75 et cette valeur de P est fournie au circuit de calcul 43, qui calcule la position du mobile.

Suivant une variante de l'invention la position d'un mobile, particulièrement celle d'un sous-marin, peut être également connu à bord de la plateforme, l'unité de traitement se trouvant par exemple sur la structure 3 de la figure 1.

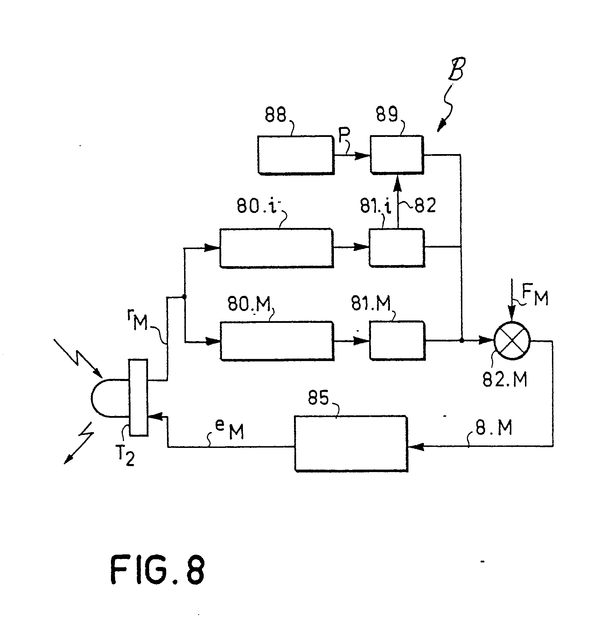

Dans ce cas une bouée répondeuse B spéciale est placée sur le mobile ayant une antenne $T_2$ (Fig. 8) pour l'émission-réception.

Comme précédemment l'interrogateur E émet périodiquement des impulsions à la fréquence f et les N bouées répondeuses fixes $B_1, \ldots B_i \ldots B_N$ répondent aux fréquences $f_1, \ldots f_i, \ldots f_N$.

La bouée répondeuse B du mobile 2 répond deux fois: d'une part directement à l'impulsion de l'interrogateur E et d'autre part à l'impulsion de l'une choisie à priori, des bouées répondeuses fixes.

Le trajet interrogateur-interrogateur par la balise fixe et par la balise embarquée étant toujours plus grand que le trajet aller et retour interrogateur mobile, ces réponses ne sont jamais simultanées. On peut donc utiliser une seule fréquence $F_M$ de réponse.

Le dispositif de réception de l'interrogateur E reçoit ces deux impulsions de réponses émises par la bouée mobile B située en $A_M$.

La réponse directe de la bouée répondeuses B arrive avec un retard $\tau_{IM}$ tel que

$$\tau_{IM} = |2ES_M|/C + \Delta t_M \tag{3}$$

$\Delta t_M$ est le retard entre émission et réception de la bouée B.

La bouée fixe, telle que $B_i$ choisie à priori, répond à l'impulsion de l'interrogateur E, cette réponse étant reçue par la bouée répondeuse mobile B, qui répond à son tour. Cette réponse étant reçue par l'interrogateur E, arrive avec un retard $\tau_{B_iM}$ tel que:

$$\tau_{B_iM} = (|EB_i| + |B_iA_M| + |A_ME|)/C + \Delta t_i + \Delta t_M \tag{4}$$

Connaissant $\Delta t_M$ et C la relation (3) permet le calcul de $|EA_M|$. On en déduit la valeur de $|B_iA_M|$ d'après la relation (4) connaissant $|EB_i|$ et $\Delta t_i$.

Il est possible de calculer les coordonnées X et Y du mobile avec une seule bouée répondeuse, la profondeur P étant connue, par exemple en transmettant la valeur de P par une transmission acoustique. La valeur de C peut être calculée comme précédemment.

Il est également possible de traiter les informations à bord d'un bateau de surface, qui reçoit les informations de la plateforme par des signaux radioélectriques.

Le dispositif à bord du sous-marin 2 est montré par la figure 8. L'antenne $T_2$ de la bouée répondeuse mobile B reçoit le signal $r_M$ en provenance de l'interrogateur E et de l'une des autres bouées répondeuses. Le signal $r_M$ est appliqué d'une part au circuit d'amplification, filtrage et détection sélectable en fréquence 80.i, pour le signal de réponse de la bouée choisie $B_i$, et d'autre part au circuit 80.M pour le signal de réponse de l'interrogateur E.

Les signaux amplifiés et détectés sont appliqués aux circuits 81.i et 81.M qui fournissent des impulsions rectangulaires retardées qui commandent le modulateur 82.M recevant par ailleurs le signal de fréquence de réémission $F_M$. Les signaux obtenus 8.M sont appliquées aux circuits d'émission 85 et fournissant le signal $e_M$, appliqué aux transducteurs de l'antenne $T_2$ de la bouée répondeuse B.

La profondeur P peut être transmise par une troisième réponse de la bouée B, l'écart de temps entre la deuxième et la troisième réponse étant proportionnel à P. P étant mesuré par un dispositif 88 et appliqué à un circuit de codage par retard 89 qui reçoit par ailleurs le signal 82 de la deuxième réémission pour commander le modulateur 82.M.

La balise réponse B de la figure 8 peut être remplacée avantageusement par:

— une balise répondeuse classique (fréquence d'interrogation F, fréquence de réponse sélectable parmi $F_1$, $\ldots F_N$)

— une balise répondeuse spéciale (fréquence d'interrogation sélectable parmi $F_1, \ldots F_N$).

En conclusion l'invention décrite permet

— dans une première configuration à un nombre quelconque de bâtiments de connaitre sa propre position
— dans une deuxième configuration, de connaître ailleurs qu'à leur propre bord la position de plusieurs véhicules sous-marins.

**Revendications**

1. Dispositif de positionnement acoustique d'un véhicule marin, comprenant un interrogateur (E) pour émettre des impulsions acoustiques sur une fréquence f à la cadence $H_1$ d'une horloge, un ensemble de bouées répondeuses fixes $(B_1 - B_N)$ pour répondre à ces impulsions de l'interrogateur par des impulsions acoustiques à des fréquences $f_1$ à $f_N$ distinctes de f et distinctes entre elles, une antenne acoustique $(A_1; A_2)$ placée sur le véhicule marin (1) pour recevoir les impulsions des bouées répondeuses, et des moyens de traitement (42—43—60) situés dans le véhicule marin pour déterminer la position dudit véhicule à partir des instants de réception des impulsions par l'antenne acoustique, des positions de l'interrogateur et des bouées répondeuses, de la vitesse C des ondes acoustiques, de la cadence $H_1$ de l'horloge, et des retards réception-émission $\Delta t_i$ des bouées répondeuses, caractérisé en ce que l'interrogateur (E) est placé de manière fixe sur le fond de la mer, que cet interrogateur comporte également des moyens de réception pour les impulsions des bouées répondeuses $(B_1 - B_N)$ et qu'il comprend en outre des circuits (22, 23) pour déterminer ladite vitesse C à partir des instants de réception des impulsions par l'interrogateur et des positions de l'interrogateur et des bouées répondeuses, et que l'interrogateur comprend en outre des moyens radio-électriques (5) pour transmettre la valeur de C ainsi déterminée auxdits moyens de traitement (42, 43, 60) du véhicule marin (1).

2. Dispositif selon la revendication 1, caractérisé en ce que le véhicule marin (1) comporte en outre une autre bouée répondeuse (B) pour émettre des impulsions acoustiques en réponse aux impulsions émises par l'interrogateur (E) et par l'une des bouées répondeuses fixes $(B_1 - B_N)$, et que l'interrogateur comporte en outre des circuits pour déterminer la position du véhicule marin.

3. Dispositif selon la revendication 2, caractérisé en ce que ladite autre bouée répondeuse comporte une première partie identique aux bouées répondeuses fixes $(B_1 - B_N)$ et une deuxième partie pouvant être réglée pour répondre à l'une desdites fréquences $F_1$ à $f_N$.

**Patentansprüche**

1. Vorrichtung zur akustischen Ortung eines Meeresfahrzeuges, mit einer Abfragevorrichtung (E) zum Aussenden von Schallimpulsen auf einer Frequenz f im Rhythmus $H_1$ eines Taktgebers, mit einer Gruppe von festen Antwortbojen $(B_1 - B_N)$ zur Beantwortung dieser Impulse der Abfragevorrichtung mit Schallimpulsen auf Frequenzen $f_1$ bis $f_N$, die verschieden von f und untereinander verschieden sind, einer akustischen Antenne $(A_1; A_2)$, die auf dem Meeresfahrzeug (1) angebracht ist, um die Impulse der Antwortbojen zu empfangen, und Verarbeitungsmitteln (42—43—60), die in dem Meeresfahrzeug gelegen sind, zur Bestimmung der Position des Fahrzeugs aus den Empfangszeitpunkten der von der akustischen Antenne empfangenen Impulse, den Positionen der Abfragevorrichtung und den Antwortbojen, der Schallgeschwindigkeit C, dem Rhythmus $H_1$ des Taktgebers und den Empfangs/Sende-Verzögerungen $\Delta t_i$ der Antwortbojen, dadurch gekennzeichnet, daß die Abfragevorrichtung (E) fest am Meeresgrund in Stellung gebracht ist und daß diese Abfragevorrichtung ferner Empfangsmittel für die Impulse der Antwortbojen $(B_1 - B_N)$ umfaßt sowie ferner Schaltungen (22, 23) zur Bestimmung der Geschwindigkeit C aus den Zeitpunkten des Empfangs der Impulse durch die Abfragevorrichtung sowie den Positionen der Abfragevorrichtung und der Antwortbojen umfaßt, und daß die Abfragevorrichtung ferner Funkeinrichtungen umfaßt, um den so bestimmten Wert C zu den Verarbeitungsmitteln (42, 43, 60) des Meeresfahrzeugs (1) zu übertragen.

2. Vorrichtung nach Anspruch 1, dadurch gekennzeichnet, daß das Meeresfahrzeug (1) ferner eine weitere Antwortboje (B) umfaßt, um Schallimpulse ansprechend auf die von der Abfragevorrichtung (E) und durch eine der festen Antwortbojen $(B_1 - B_N)$ ausgesendeten Impulse auszusenden, und daß die Abfragevorrichtung ferner Schaltungen zur Bestimmung der Position des Meeresfahrzeugs umfaßt.

3. Vorrichtung nach Anspruch 2, dadurch gekennzeichnet, daß die weitere Antwortboje einen ersten Teil umfaßt, der mit den festen Antwortbojen $(B_1 - B_N)$ vollständig übereinstimmt, und einen zweiten Teil umfaßt, der eingestellt werden kann, um auf einer der genannten Frequenzen $F_1$ bis $F_N$ zu antworten.

**Claims**

1. Acoustic position finding device for a seacraft comprising an interrogator (E) for transmitting acoustic pulses at a frequency f in the rhythm $H_1$ of a clock, a set of stationary response buoys $(B_1 - B_N)$ for responding to these pulses of the interrogator by acoustic pulses at the frequencies $f_1$ to $f_N$ different from f and different from each other, an acoustic antenna $(A_1; A_2)$ located on the seacraft (1) for receiving the pulses of the response buoys, and processing means (41—43—60) located in the seacraft to determine the position of said craft based on the moments of reception of the pulses by the acoustic antenna, the positions of the interrogator and the response buoys, the speed C of the acoustic waves, the rhythm $H_1$ of the clock and the reception-transmission delays $\Delta t_i$ of the response buoys, characterized in that the interrogator (E) is located in stationary manner on the ground of the sea, that this interrogator further comprises reception means for the pulses from the response buoys $(B_1-B_N)$ and that it further comprises circuits (22, 23) to determine said speed C based on the moment of reception of the pulses by the interrogator and the positions of the interrogator and the response buoys, and that the interrogator further comprises radio-electric means (5) for transmitting the thus determined value of C to said processing means (42, 43, 60) of the seacraft (1).

2. Device according to claim 1, characterized in that the seacraft (1) further comprises another response buoy (B) for transmitting acoustic pulses in response to the pulses transmitted by the interrogator (E) and by one of the stationary response buoys $(B_1-B_N)$, and in that the interrogator further comprises circuits to determine the position of the seacraft.

3. Device according to claim 2, characterized in that said further response buoy comprises a first portion identical to the stationary response buoys $(B_1-B_N)$ and a second portion capable of being adjusted to respond to one of said frequencies $F_1$ to $f_N$.

6

# FIG.1

0 084 468

FIG.2

FIG.3

# FIG.4

# FIG.5

# FIG.6

# FIG.7

FIG.8